# EUROPÄISCHE PATENTSCHRIFT

(11) **EP 0 891 069 B1**
(45) Veröffentlichungstag und Bekanntmachung des Hinweises auf die Patenterteilung: **06.10.2004**
(21) Anmeldenummer: 98112508.1
(22) Anmeldetag: 06.07.1998
(51) Int. Cl.: H04M 15/00, H04M 3/42, H04M 3/36

(54) **Erkennung eines betrügerischen Anrufs mittels eines neuronalen Netzes**
Identification of a fraudulent call with a neural network
Identification d'un appel frauduleux avec un réseau neuronal

(30) Priorität: 10.07.1997 DE 19729630
(43) Veröffentlichungstag der Anmeldung: 13.01.1999
(73) Patentinhaber: SIEMENS AKTIENGESELLSCHAFT, 80333 München (DE)
(72) Erfinder: Taniguchi, Michiaki, 80469 München (DE); Haft, Michael, 81737 München (DE); Tresp, Volker, 80539 München (DE); Hollmen, Jaakko, 81541 München (DE)

(56) Entgegenhaltungen:
- EP-A- 0 653 868
- WO-A-94/06103
- GB-A- 2 303 275
- US-A- 5 345 595
- BURGE P ET AL: "Fraud detection and management in mobile telecommunications networks" EUROPEAN CONFERENCE ON SECURITY AND DETECTION - ECOS97 INCORPORATING THE ONE DAY SYMPOSIUM ON TECHNOLOGY USED FOR COMBATTING FRAUD (CONF. PUBL. NO.437), 28. - 30. April 1997, Seiten 91-96, XP002085420 ISBN 0-85296-683-0, 1997, London, UK, IEE, UK
- BARSON P ET AL: "The detection of fraud in mobile phone networks" NEUROFUZZY'96. IEEE EUROPEAN WORKSHOP, PRAGUE, CZECH REPUBLIC, 16-18 APRIL 1996, Bd. 6, Nr. 4, Seiten 477-484, XP002085421 ISSN 1210-0552, Neural Network World, 1996
- REHKUGLER H.; ZIMMERMANN H.G.; HRSG.: 'Neuronale Netze in der Ökonomie', September 1994, VAHLEN

## Beschreibung

Die Erfindung betrifft eine Erkennung eines Betrugs anhand eines zu einem Anruf aus einem Kommunikationsnetz gehörenden Abrechnungsdatensatzes mittels eines neuronalen Netzes.

Durch betrügerische Anrufe, also Anrufe, für die nichts bezahlt wird, entsteht den Betreibern von Kommunikationsnetzen, z.B. Mobilfunknetzen, ein beträchtlicher wirtschaftlicher Schaden.

Es sind vielerlei Szenarien für einen Betrug denkbar. Ein Szenario ist beispielsweise das unlautere Verkaufen von Anrufen (Call-Selling-Problem), bei dem Anrufe, typischerweise ins Ausland, vom Betrüger an Dritte günstig weiterverkauft werden. Der betroffene Betreiber des Kommunikationsnetzes erhält jedoch nie die angefallenen Kosten für die über den Betrüger abgewickelten Anrufe erstattet, da der Betrüger zur Vergebührung nicht mehr greifbar ist.

Aufbau, Funktion und Wirkungsweise neuronaler und kausaler Netze sind dem Fachmann hinlänglich bekannt.

Ebenso sind bereits Verfahren zur Erkennung einer Mißbräuchlichen Nutzung von Kommunikations geräten mittels neuronaler Netze in Stand der Technik bekannt (GB 2 303 275, WO 94 106 103).

Die Aufgabe der Erfindung besteht darin, einen Betrug zu erkennen, der auf einem nicht autorisierten Anruf basiert, indem mittels eines neuronalen Netzes eine den Betrug bedingende Änderung im Anrufverhalten eines Teilnehmers angezeigt wird.

Diese Aufgabe wird gemäß den Merkmalen des Patentanspruchs 1 gelöst.

Generell sei an dieser Stelle angemerkt, daß das neuronale Netz auch durch ein kausales Netz ersetzt werden kann.

Problematisch ist die Erkennung eines Betrugs, der nicht offensichtlich ist und dem Betreiber des Kommunikationsnetzes nicht von alleine auffällt. Dieser verdeckte Betrug ist nicht sofort erkennbar, sondern muß über einen bestimmten Zeitabschnitt aus dem beobachteten Verhalten eines Teilnehmers des Kommunikationsnetzes bestimmt werden. Tritt eine auffällige Verhaltensänderung des Teilnehmers über einen vorgegebenen Zeitraum auf, so kann mit einer bestimmten Wahrscheinlichkeit auf einen betrügerischen Anruf rückgeschlossen werden. Dazu ist für jeden Teilnehmer ein spezielles Benutzerprofil nötig, das dessen typisches Anrufverhalten beschreibt. Dabei ist ein Betrug eine Abweichung von diesem Anrufverhalten.

Bei jedem Anruf aus einem Kommunikationsnetz fällt ein Abrechnungsdatensatz an, der verschiedene, für die Erkennung eines Betrugs nützliche Daten, enthält. Als Eingangsgrößen für das neuronale Netz dienen insbesondere Werte aus dem zu dem aktuellen Anruf gehörenden Abrechnungsdatensatz und aus Abrechnungsdatensätzen zurückliegender Anrufe. Ein Anrufverhalten eines Teilnehmers ergibt sich aus den Werten seiner Abrechnungsdatensätze.

Eine Ausgangsgröße des neuronalen Netzes gibt die Wahrscheinlichkeit dafür an, daß der aktuelle Anruf einen Betrug darstellt. Der Betrug wird als solcher klassifiziert, falls die Ausgangsgröße des neuronalen Netzes einen vorgebbaren Wert überschreitet, ansonsten wird der aktuelle Anruf nicht als Betrug gewertet.

Ferner werden die Eingangsgrößen in ein kausales Netz eingegeben, wobei das kausale Netz vorgebbare Betrugsszenarien als Expertenwissen enthält und mit einer Ergebnisgröße, die angibt, wie wahrscheinlich ein auf den Eingangsgrößen basierender Betrug mit mindestens einem der Betrugsszenarien übereinstimmt, auf die Eingangsgrößen reagiert.

Die daraus resultierende Ergebnisgröße wird mit der Ausgangsgröße des neuronalen Netzes kombiniert, um eine aussagekräftige Gesamtwahrscheinlichkeit für das Auftreten eines Betrugs zu erhalten.

Das neuronale Netz wird vorzugsweise vor Eingabe der Eingangsgrößen trainiert, indem einem neuen Teilnehmer zunächst ein mittleres Benutzerprofil zugewiesen wird und dieses Benutzerprofil angepaßt wird, indem ein Wahrscheinlichkeitsmodell, das ein Anrufverhalten des jeweiligen Teilnehmers aus Abrechnungsdatensätzen beschreibt, erstellt wird. Schließlich wird das Wahrscheinlichkeitsmodell adaptiert, indem für einen vorgebbaren Zeitraum die Eingangsgrößen aus den Abrechnungsdatensätzen für den jeweiligen Teilnehmer zum Training des neuronalen Netzes herangezogen werden.

Als eine Weiterbildung der Erfindung sind Eingangsgrößen für das neuronale Netz verschiedene Werte aus den Abrechnungsdatensätzen, sowohl einzeln oder in vorgegebener Kombination untereinander, wobei der Abrechnungsdatensatz des aktuellen Anrufs ebenso wie Abrechnungsdatensätze zurückliegender Anrufe Berücksichtigung finden:
a) eine Dauer eines nationalen und/oder eines internationalen Anrufs;
b) Anzahlen der in einer vorgebbaren Zeit durchgeführten nationalen und/oder internationalen Anrufe;
c) eine kumulierte Dauer der nationalen und/oder internationalen Anrufe;
d) eine mittlere Gesprächsdauer über die vorgebbare Zeit;
e) eine maximale Gesprächsdauer über die vorgebbare Zeit.

Die vorstehend aufgezählten Werte sind nicht einschränkend oder als ausschließlich zu verwendende Werte zu verstehen. Es können beliebige Werte aus Abrechnungsdatensätzen atomar oder unter Berücksichtigung von Zusammenhängen, insbesondere mit Abrechnungsdatensätzen zurückliegender Anrufe, kombiniert und als Eingangsgrößen für das neuronales Netz verwendet werden.

Werden Abrechnungsdatensätze zurückliegender Anrufe mitberücksichtigt, so kann die Zeitdauer für zu berücksichtigende zurückliegende Anrufe statisch oder dynamisch innerhalb eines vorgebbaren Wertebereichs variiert werden.

Entscheidend ist, daß aus einer vorgegebenen Menge von Eingangsgrößen die Bewertung des aktuellen Anrufs als Betrug oder Nichtbetrug (Ausgangsgröße) gegeben ist.

Eine andere Weiterbildung der Erfindung besteht darin, die Eingangsgrößen unterschiedlichen Tageszeiten zuzuordnen. Eine mögliche Unterteilung in Tageszeiten unterscheidet Tag, Abend und Nacht.

Eine nächste Weiterbildung enthält die Darstellung des Wahrscheinlichkeitsmodells als zumindest eine Gaußsche Mischdichte, die mehrere Gaußkurven umfaßt, wobei das Wahrscheinlichkeitsmodell adaptiert werden kann, indem jeweilige Varianzen der einzelnen Gaußkurven entsprechend den Eingangsgrößen für den vorgebbaren Zeitraum verändert werden

Eine andere Weiterbildung der Erfindung besteht darin, während eines vorgebbaren Zeitabschnitts Abrechnungsdatensätze zu sammeln und mittels der Ausgangsgröße des neuronalen Netzes nach Ablauf des vorgebbaren Zeitabschnitts für die Abrechnungsdatensätze die Wahrscheinlichkeit dafür zu bestimmen, daß in dem vorgebbaren Zeitabschnitt ein Betrug durchgeführt wurde.

Eine Weiterbildung ist es, mehrere Teilnehmer, die ein vergleichbares Anrufverhalten aufweisen, in einer Gruppe zusammenzufassen und das Benutzerprofil dieser Gruppe in dem neuronalen Netz zu trainieren.

Auch kann das neuronale Netz nach dem Training adaptiert werden.

Weiterbildungen der Erfindung ergeben sich auch aus den abhängigen Ansprüchen.

Ausführungsbeispiele der Erfindung werden nachfolgend anhand der Zeichnungen dargestellt und erläutert.

Es zeigen
- Fig.1: ein Blockdiagramm, das Schritte eines Verfahrens zum Erkennen eines betrügerischen Anrufs aus einem Kommunikationsnetz enthält,
- Fig.2: eine Skizze, die die Funktionsweise des Verfahrens zur Erkennung des betrügerisches Anrufs angibt,
- Fig.3: eine schematische Darstellung einer Gaußschen Mischdichte,
- Fig.4: eine Skizze, die allgemein eine Betrugswahrscheinlichkeit einem vorgebbaren Benutzerprofil grafisch gegenüberstellt,
- Fig.5: ein kausales Netz, das zur Beschreibung des Anrufverhaltens bei unterschiedlichen Mißbrauchsszenarien dient,
- Fig.6: ein kausales Netz, das ein Teilnehmermodell darstellt.

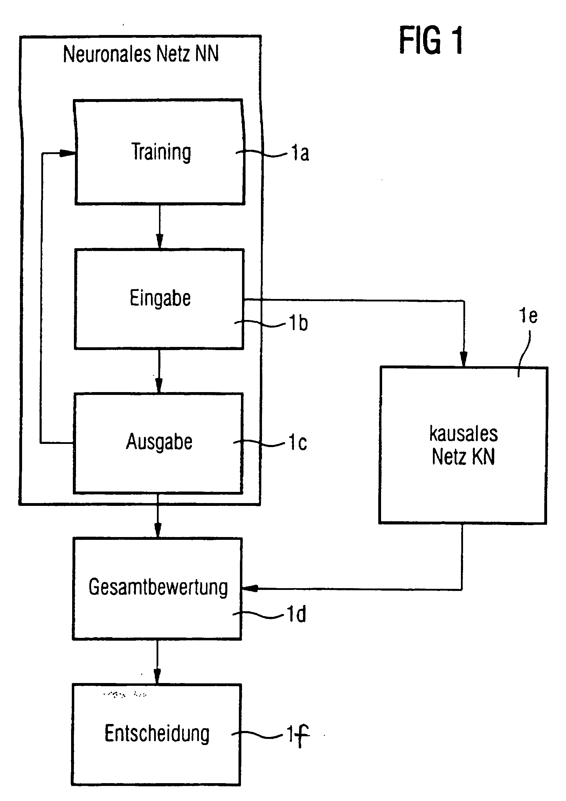

Bevor das Verfahren in seiner Gesamtheit anhand des zugehörigen Blockdiagramms in Fig.1 erläutert wird, wird eine Hinführung zu dem Verfahren mittels weiterer Figuren vorgezogen.

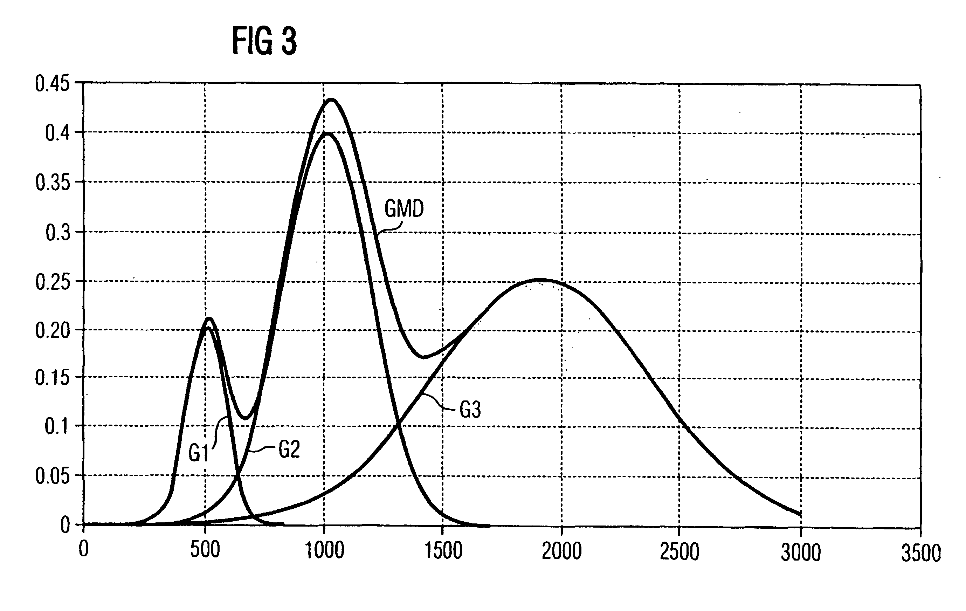

In **Fig.3** sind einzelne Gaußkurven G1, G2 und G3 und in diesem Zusammenhang eine Gaußsche Mischdichte GMD dargestellt.

Das hier vorgestellte Verfahren bezieht sich auf ein neuronales Netz, das unüberwacht trainiert wird, d.h. während des Trainings ist keine Information darüber notwendig (oder verfügbar), ob der betrachtete Teilnehmer ein Betrüger ist oder nicht. Ein Ansatz des unüberwachten Lernens besteht in der Dichteschätzung. Mit Hilfe der Gaußschen Mischdichte (bekannt aus [1]) wird für jeden Teilnehmer in einem Kommunikationsnetz anhand seines vergangenen Verhaltensmusters ein Wahrscheinlichkeitsmodell erstellt, das ein typisches Anrufverhalten des jeweiligen Teilnehmers repräsentiert. Die Gaußsche Mischdichte besteht aus mehreren Gaußkurven. Während des unüberwachten Lernens, durchgeführt mittels des EM-Algorithmus (Details siehe ebenfalls [1]) werden die freien Parameter wie Erwartungswerte und Standardabweichungen der einzelnen Gaußkurven bestimmt.

Die Anpassung an teilnehmerspezifische Wahrscheinlichkeitsmodelle.erfolgt "online" durch Justierung der Höhen der einzelnen Gaußkurven. Grundlage für diese "online"-Anpassung (Teil des Trainings) sind vorzugsweise Abrechnungsdatensätze der jeweiligen Teilnehmer für einen Zeitraum der letzten 20 Tage.

Das nach der Anpassung entstandene Wahrscheinlichkeitsmodell für jeden Teilnehmer erlaubt eine Bewertung des aktuellen Anrufverhaltens eines Teilnehmers im Hinblick auf einen potentiellen betrügerischen Anruf und es wird ggf., d.h. bei Vorliegen eine betrügerischen Anrufs mit einer vorgebbaren Wahrscheinlichkeit, eine Warnung (Alarm) ausgegeben.

Alternativ dazu kann aus Abrechnungsdaten für einen vorgebbaren Zeitraum, z.B. für einen Tag, auf einen betrügerischen Anruf geschlossen werden, wobei mehrere Teilnehmer, die ähnliches Anrufverhalten zeigen, zu einer Gruppe zusammengefaßt sein können und ein Benutzerprofil (Teilnehmermodell) für diese Gruppe erstellt wird.

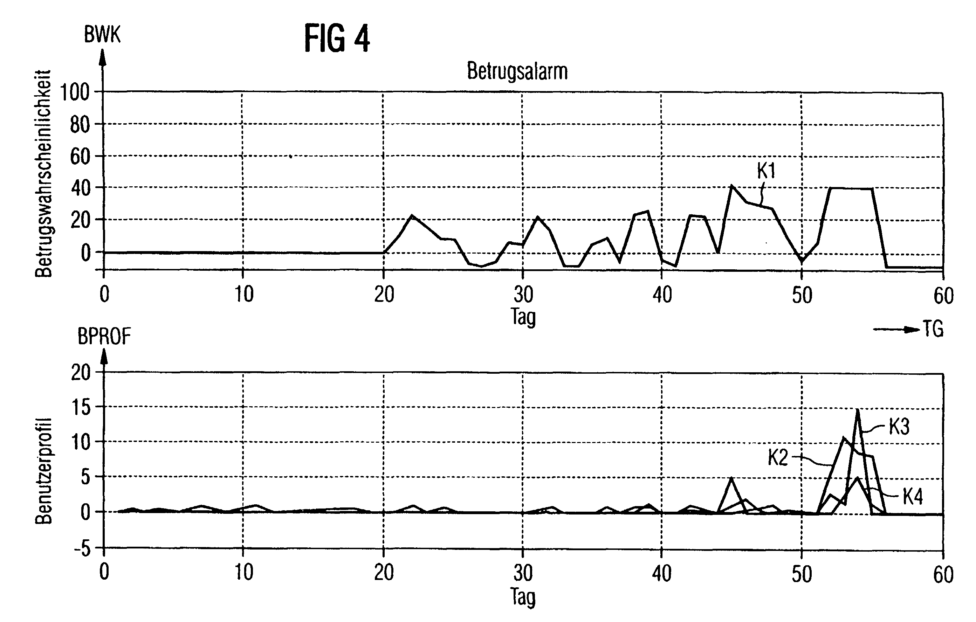

In **Fig.4** ist oben ein Verlauf K1 einer Betrugswahrscheinlichkeit BWK über einer Zeitachse TG dargestellt. Ein neuronales Netz, das unüberwacht über einen vorgebbaren Zeitraum, hier 20 Tage, trainiert worden ist, ermittelt nach dem Training für den jeweiligen Teilnehmer eine Betrugswahrscheinlichkeit BWK. Im unteren Teilbild von Fig.4 ist das Benutzerprofil BPROF, also einige vorgebbare Größen dieses Profils in Form der Verläufe K2, K3 und K4, über die Zeit TG dargestellt. Wann nun eine Warnung ausgegeben werden soll, hängt von der Festlegung eines vorgebbaren Schwellwertes ab.

Auch nach dem Training können die erhaltenen Abrechnungsdaten für eine Adaption des neuronalen Netzes verwendet werden. Hierbei sei angemerkt, daß das Teilnehmermodell neben dem neuronalen Netz auch durch ein kausales Netz dargestellt werden kann.

Zur Erkennung eines betrügerischen Anrufs wird, wie oben beschrieben, das Anrufverhalten eines Teilnehmers mittels des neuronalen Netzes trainiert. Weiterhin ist es nützlich, das Wissen aus unterschiedlichen Mißbrauchsszenarien für betrügerische Anrufe in die Erkennung miteinfließen zu lassen. Je mehr Kenngrößen zur Beschreibung eines Anrufverhaltens zur Verfügung stehen, desto besser ist die Erkennung des betrügerischen Anrufs.

Mittels kausaler Netze läßt sich Expertenwissen für Mißbrauchsszenarien wirkungsvoll strukturieren und entsprechend der Struktur mit (bedingten) Wahrscheinlichkeiten belegen.

Grundlage eines kausalen Netzes ist ein (gerichteter) Graph, in dem unterschiedliche Variablen mit Pfeilen verbunden sind. Jeder Graph stellt eine Klasse von Wahrscheinlichkeitsverteilungen dar. Pfeile innerhalb der Klasse bedeuten zugelassene direkte statistisch bedingte Abhängigkeiten.

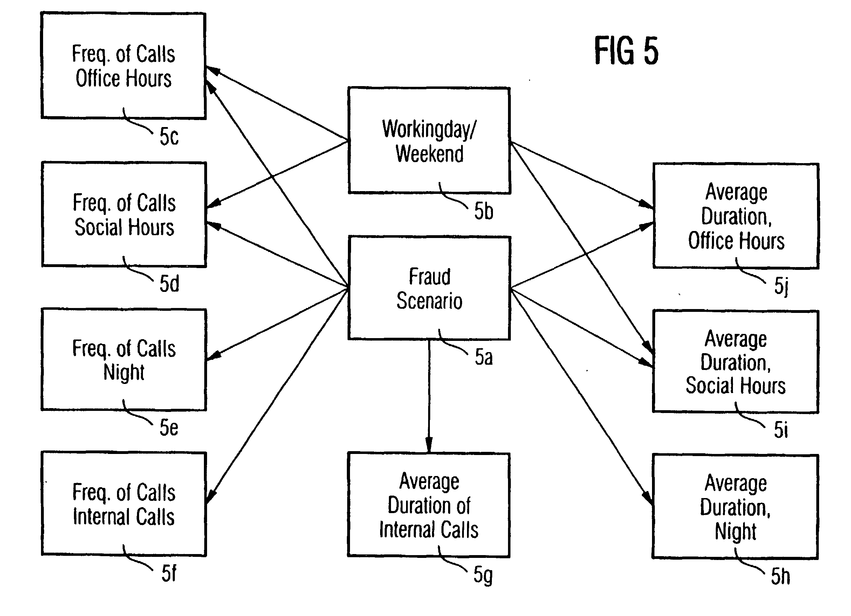

**Fig.5** zeigt ein kausales Netz, das zur Beschreibung des Anrufverhaltens bei verschiedenen Mißbrauchsszenarien dient. Das Anrufverhalten (hier: Häufigkeiten und mittlere Längen der Anrufe (siehe 5c bis 5j) wird in dem kausalen Netz bedingt durch die Art des Mißbrauchs 5a und den Tagestyp 5b). Diese Bedingungen werden ausgedrückt durch die Pfeile in Fig.5.

Die Modellierung des Teilnehmers (Teilnehmermodell) wird durchgeführt, indem anfangs ein mittleres Teilnehmermodell zugewiesen wird. Dieses Teilnehmermodell wird speziell auf den jeweiligen Teilnehmer angepaßt, indem Abrechnungsdatensätze, die von diesem Teilnehmer stammen, für eine Anpassung des mittleren Teilnehmermodells verwendet werden. Es ergibt sich ein spezifisches Teilnehmermodell.

Eine Gesamtbewertung, die sich aus dem neuronalen Netz und dem kausalen Netz zusammensetzt, kombiniert die Fragen
1. Paßt der Anruf in das Teilnehmermodell?
2. Handelt es sich bei dem Anruf um ein typisches Mißbrauchsszenario?
und bewertet somit den aktuellen Anruf unter Berücksichtigung der beiden Fragen zugrundeliegenden Wahrscheinlichkeiten für einen betrügerischen Anruf.

Generell wird also ein Alarm, der einen betrügerischen Anruf signalisiert, angezeigt, wenn
1. eine schnelle Veränderung des Teilnehmerverhaltens, das nicht dem Teilnehmerprofil entspricht, auftritt, oder
2. ein Anruf auftritt, der einem Mißbrauchsszenario mit vorgebbarer Wahrscheinlichkeit entspricht.

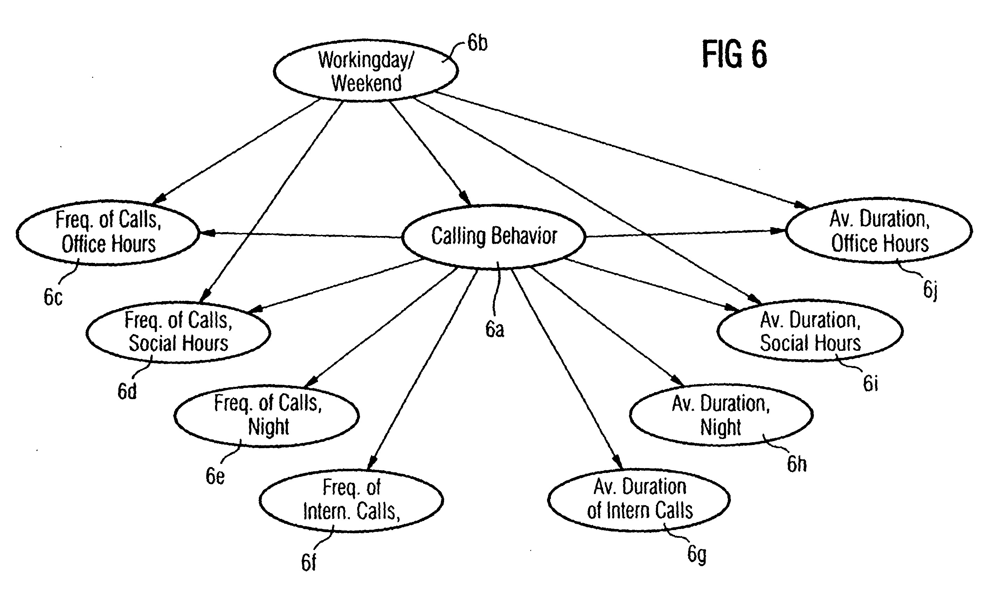

In **Fig.6** wird ein weiteres kausales Netz mit einem Teilnehmermodell gezeigt. Dabei kann zur Beschreibung des Teilnehmermodells dieses kausales Netz alternativ zu dem neuronalen Netz eingesetzt werden. In Fig.6 werden die Häufigkeiten der Anrufe (siehe 6c bis 6f) und die durchschnittliche Dauer der Anrufe (siehe 6g bis 6j) bedingt durch das Anrufverhalten (siehe 6a) und bedingt durch die Unterscheidung Arbeitstag/Wochenende (siehe 6b) dargestellt.

In **Fig.1** ist ein Blockdiagramm dargestellt, das Schritte 1a bis 1f eines Verfahrens zur Erkennung eines betrügerischen Anrufs enthält. Ein neuronales Netz NN wird unüberwacht, also ohne das aus einem Satz Trainingsdaten bekannt ist, ob ein betrügerischer Anruf vorliegt oder nicht, trainiert (siehe Schritt 1a). Nach dem Training liefert das neuronale Netz NN auf einen Eingabewert (Anruf, siehe Schritt 1b) im Schritt 1c eine Ausgabewert, der kennzeichnet, daß der aktuelle Anruf mit einer bestimmten Wahrscheinlichkeit in das Teilnehmerprofil paßt.

Die Daten des aktuellen Anrufs (Schritt 1b) werden ebenso in das kausalen Netz KN (Schritt 1e; Beschreibung, siehe oben) eingegeben, wobei auch das kausale Netz eine Betrugswahrscheinlichkeit ausgibt.

In einer Gesamtbewertung (Schritt 1d) werden die Ergebnisse aus dem neuronalen Netz NN und den kausalen Netz KN kombiniert zu einer Gesamt-Betrugswahrscheinlichkeit für den aktuellen Anruf, wobei in einer Schwellwertentscheidung im Schritt 1f ein Alarm zur Signalisierung des Betrugs ausgelöst wird oder nicht.

Nachfolgend wird auf die Eingabedaten eingegangen, die aus den Abrechnungsdatensätzen für jeden Anruf aus dem Kommunikationsnetz gewonnen werden:

Jeder Anruf aus dem Kommunikationsnetz verursacht einen Abrechnungsdatensatz, der verschiedene Werte, u.a.
a) eine Identifikationsnummer des Teilnehmers;
b) eine Dauer des Gesprächs;
c) Information darüber, ob der Anruf im Inland bleibt oder ins Ausland geht (Unterscheidung: national/international);
d) eine Startzeit des Gesprächs.

Aus diesen Daten, die bei jedem Anruf aus dem Kommunikationsnetz anfallen, werden für einen vorgegebenen Zeitabschnitt kumulierte Werte ermittelt, u.a.:
a) eine Anzahl nationaler und internationaler Anrufe;
b) eine absolute Dauer und eine relative Dauer sowohl der nationalen als auch der internationalen Anrufe;
c) eine mittlere Gesprächsdauer;
d) eine Varianz der Gesprächsdauer;
e) eine maximale Gesprächsdauer des betrachteten Zeitraums.

Entsprechend dem vorgegebenen Zeitraum werden mit Hilfe dieser Daten Statistiken für den Teilnehmer geführt, wobei zusätzlich unterschiedliche Tageszeiten (Tag, Abend und Nacht) berücksichtigt werden.

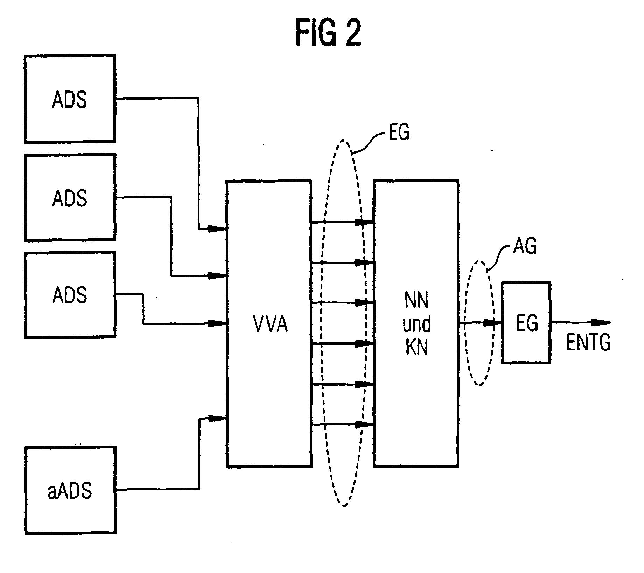

In **Fig.2** wird die Funktionsweise des Verfahrens zur Erkennung des Betrugs mittels des neuronalen Netzes NN und des kausalen Netzes KN dargestellt. Jeder Anruf resultiert in einem Abrechnungsdatensatz ADS, wobei für den aktuell abgehenden Anruf ein aktueller Abrechnungsdatensatz aADS angelegt wird. Die Daten aus den Abrechnungsdatensätzen (ADS und aADS) werden in einer Vorverarbeitung VVA auf Eingangsgrößen EG für das neuronale Netz NN und das kausale Netz KN abgebildet. Die Ausgabegröße AG Netzes kennzeichnet die kombinierte Gesamt-Betrugswahrscheinlichkeit, bestimmt durch das neuronale Netz NN und das kausale Netz KN, dafür, daß der aktuelle Anruf einem Betrug entspricht. Ein Schwellwertvergleich EG gibt die Entscheidung ENTG aus, ob der vorliegende Anruf ein Betrug ist oder nicht, indem die Ausgangsgröße AG, also die Wahrscheinlichkeit mit einer vorgebbaren Schranke (Schwellwert) verglichen wird und der aktuelle Anruf einem Betrug zugeordnet wird, falls die Ausgangsgröße AG des größer als die vorgebbare Schranke ist, oder es wird nicht auf Betrug entschieden, falls die Ausgangsgröße AG kleiner als die vorgebbare Schranke ist.

Im Rahmen dieses Dokuments wurde folgende Veröffentlichung zitiert:
[1] Prof. Dr. Heinz Rehkugler und Dr. Hans Georg Zimmermann (Herausgeber): Neuronale Netze in der Ökonomie, S.110-117, Verlag Vahlen, Sept. 1994, ISBN 3800618710.

## Patentansprüche

1. Verfahren zur Erkennung eines Betrugs anhand eines aus einem Anruf resultierenden Abrechnungsdatensatzes (aADS) mittels eines neuronalen Netzes (NN), bei dem
a) aus dem Abrechnungsdatensatz (aADS) sowie aus Abrechnungsdatensätzen zurückliegender Anrufe (ADS) gewonnene Eingangsgrößen in das neuronale Netz (NN) eingegeben werden,
b) eine Ausgangsgröße (AG) des neuronalen Netzes bestimmt wird, die eine Wahrscheinlichkeit für den Betrug angibt,
**dadurch gekennzeichnet, dass**
c) die Eingangsgrößen in ein kausales Netz (KN) das typische vorgebbare Betrugsszenarien als Expertenwissen enthält, eingegeben werden,
d)durch das kausale Netz eine Ergebnisgröße, die angibt, wie wahrscheinlich ein Betrug mit mindestens einem der Betrugsszenarien übereinstimmt, bestimmt wird (1e)
e)bei dem aus der Ergebnisgröße und der Ausgangsgröße eine Gesamtwahrscheinlichkeit für das Auftreten eines Betrugs ermittelt wird (1d)
f)der Betrug angezeigt wird als existent, falls die Gesamtwahrscheinlichkeit einen vorgebbaren Wert überschreitet, und bei dem der Betrug erkannt wird als nicht existent, falls die Gesamtwahrscheinlichkeit den vorgebbaren Wert nicht überschreitet (1f)

2. Verfahren nach Anspruch 1,
bei dem das neuronale Netz (NN) vor Eingabe der Eingangsgrößen trainiert wird (1a) indem
a)einem neuen Teilnehmer zunächst ein mittleres Benutzerprofil zugewiesen wird,
b)für den neuen Teilnehmer das Benutzerprofil angepasst wird, indem ein Wahrscheinlichkeitsmodell, das ein Anrufverhalten des jeweiligen Teilnehmers aus Abrechnungsdatensätzen beschreibt, erstellt wird,
c) das Wahrscheinlichkeitsmodell adaptiert wird, indem für einen vorgebbaren Zeitraum die Eingangsgrößen aus den Abrechnungsdatensätzen für den jeweiligen Teilnehmer zum Training des neuronalen Netzes herangezogen werden.

3. Verfahren nach Anspruch 1 oder 2,
bei dem als Eingangsgrößen für das neuronale Netz folgende Werte aus dem Abrechnungsdatensatz, der dem aktuellen Anruf entspricht, oder den Abrechnungsdatensätzen zurückliegender Anrufe dargestellt werden:
a) eine Dauer eines nationalen und/oder eines internationalen Anrufs;
b) eine Anzahl der in einer vorgebbaren Zeit durchgeführten nationalen und/oder internationalen Anrufe;
c) eine kumulierte Dauer der nationalen und/oder internationalen Anrufe;
d) eine mittlere Gesprächsdauer über die vorgebbare Zeit;
e) eine maximale Gesprächsdauer über die vorgebbare Zeit.

4. Verfahren nach Anspruch 3,
bei dem die Eingangsgrößen in unterschiedliche Tageszeiten zugeordnet werden.

5. Verfahren nach Anspruch 4,
bei dem die unterschiedlichen Tageszeiten folgender Unterteilung entsprechen:
a)Tag;
b)Abend;
c)Nacht.

6. Verfahren nach Anspruch 2,
bei dem das Wahrscheinlichkeitsmodell durch zumindest eine Gaußsche Mischdichte, die mehrere Gaußkurven umfasst, dargestellt wird.

7. Verfahren nach Anspruch 6,
bei dem das Wahrscheinlichkeitsmodell adaptiert wird, indem jeweilige Varianzen der einzelnen Gaußkurven entsprechend den Eingangsgrößen für den vorgebbaren Zeitraum verändert werden.

8. Verfahren nach einem der vorhergehenden Ansprüche,
bei dem über einen vorgebbaren Zeitabschnitt Abrechnungsdatensätze gesammelt werden und die Ausgangsgröße des neuronalen Netzes nach Ablauf des vorgebbaren Zeitabschnitts für die Abrechnungsdatensätze die Wahrscheinlichkeit dafür angibt, dass in dem vorgebbaren Zeitabschnitt ein betrügerischer Anruf durchgeführt wurde.

9. Verfahren nach einem der vorhergehenden Ansprüche,
bei dem mehrere Teilnehmer, die ein vergleichbares Anrufverhalten aufweisen, zu einer Gruppe zusammengefasst werden und somit das Benutzerprofil der Gruppe in dem neuronalen Netz trainiert wird.

10. Verfahren nach einem der vorhergehenden Ansprüche,
bei dem das neuronale Netz nach dem Training adaptiert wird anhand der ermittelten Wahrscheinlichkeiten für einen betrügerischen Anruf.

## Claims

1. Method for detecting a fraud with the help of an accounting data record (aADS) resulting from a call by means of a neural network (NN) in which
a) input variables obtained from the accounting data record (aADS) and also from accounting data records from previous calls (ADS) are input into the neural network (NN),
b) an output variable (AG) from the neural network (NN) indicates the probability of a fraud,
**characterized in that**
c) the input variables are input into a causal network (KN) which contains typical specifiable fraud scenarios as expertise,
d) a result variable indicating the level of probability with which a fraud matches at least one of the fraud scenarios is determined by the causal network (1e),
e) an overall probability for the occurrence of a fraud is determined from the result variable and the output variable (1d),
f) the fraud is indicated as existing if the overall probability exceeds a specifiable value, and in which the fraud is recognized as non-existent if the overall probability does not exceed the specifiable value (1f).

2. Method according to Claim 1,
in which the neural network (NN) is trained prior to input of the input variables (1a) by
a) initially assigning an average user profile to a new subscriber,
b) modifying the user profile for the new subscriber by creating a probability model which describes a calling behavior for the subscriber in question from accounting data records,
c) the probability model is adapted by using the input variables from the accounting data records for the subscriber in question for a specifiable period of time for the purposes of training the neural network.

3. Method according to Claim 1 or 2,
in which the following values from the accounting data record, which corresponds to the current call, or from the accounting data records for previous calls are represented as input variables for the neural network:
a) a duration of a national and/or an international call;
b) a number of national and/or an international calls made in a specifiable period of time;
c) a cumulative duration of the national and/or an international calls;
d) an average call duration over the specifiable period of time;
e) a maximum call duration over the specifiable period of time.

4. Method according to Claim 3,
in which the input variables are assigned to different times of day.

5. Method according to Claim 4,
in which the different times of day conform to the following subdivision:
a) day;
b) evening;
c) night.

6. Method according to Claim 2,
in which the probability model is represented by at least one Gaussian mixture density which comprises a plurality of Gaussian curves.

7. Method according to Claim 6,
in which the probability model is adapted by changing the respective variances of the individual Gaussian curves accordance with the input variables for the specifiable period of time.

8. Method according to one of the preceding claims,
in which accounting data records are collected over a specifiable period of time and, after the specifiable period of time has elapsed for the accounting data records, the output variable from the neural network indicates the probability that a fraudulent call has been made in the specifiable period of time.

9. Method according to one of the preceding claims,
in which a plurality of subscribers who exhibit a comparable calling behaviour are combined to form a group and the user profile of the group in the neural network is thus trained.

10. Method according to one of the preceding claims,
in which the neural network is adapted after training using the determined probabilities for a fraudulent call.

## Revendications

1. Procédé d'identification d'une fraude en se basant sur un ensemble de données de facturation (aADS) résultant d'un appel, au moyen d'un réseau neuronal (NN), dans lequel
a) des grandeurs d'entrée obtenues à partir de l'ensemble de données de facturation (aADS) ainsi que des ensembles de données de facturation d'appels antérieurs (ADS) sont entrées dans le réseau neuronal (NN),
b) on détermine une grandeur de sortie (AG) du réseau neuronal qui indique une probabilité pour la fraude,
**caractérisé en ce que**
c) les grandeurs d'entrée sont entrées dans un réseau causal (KN) qui contient, en tant que savoir expert, des scénarii de fraude typiques définissables à l'avance,
d) on détermine, grâce au réseau causal, une grandeur résultante (1e) qui indique le degré de probabilité pour qu'une fraude coïncide avec au moins un des scénarii de fraude,
e) dans lequel on détermine (1d), à partir de la grandeur résultante et de la grandeur de sortie, une probabilité globale pour la survenue d'une fraude,
f) la fraude est indiquée comme existante dans le cas où la probabilité globale dépasse une valeur définissable à l'avance, et dans lequel la fraude est identifiée comme non existante dans le cas où la probabilité globale ne dépasse pas la valeur définissable à l'avance (1f).

2. Procédé selon la revendication 1, dans lequel le réseau neuronal (NN) fait l'objet d'un apprentissage (1a) avant l'entrée des grandeurs d'entrée, l'apprentissage se déroulant
a) en affectant d'abord à un nouvel abonné un profil d'utilisateur moyen,
b) en adaptant le profil d'utilisateur pour le nouvel abonné, ceci en établissant un modèle de probabilité qui décrit un comportement d'appel de l'abonné respectif à partir d'ensembles de données de facturation,
c) en adaptant le modèle de probabilité, ceci en utilisant pour l'apprentissage du réseau neuronal, pendant une période définissable à l'avance, les grandeurs d'entrée provenant des ensembles de données de facturation pour l'abonné respectif.

3. Procédé selon la revendication 1 ou 2, dans lequel on représente, en tant que grandeurs d'entrée pour le réseau neuronal, les valeurs suivantes provenant de l'ensemble de données de facturation correspondant à l'appel actuel ou des ensembles de données de facturation d'appels antérieurs :
a) une durée d'un appel national et/ou international ;
b) un nombre des appels nationaux et/ou internationaux passés dans une période définissable à l'avance ;
c) une durée cumulée des appels nationaux et/ou internationaux ;
d) une durée moyenne de conversation sur la période définissable à l'avance ;
e) une durée maximum de conversation sur la période définissable à l'avance.

4. Procédé selon la revendication 3,
dans lequel les grandeurs d'entrée sont associées à différents moments du jour.

5. Procédé selon la revendication 4,
dans lequel les différents moments du jour correspondent à la division suivante :
a) journée ;
b) soirée ;
c) nuit.

6. Procédé selon la revendication 2,
dans lequel le modèle de probabilité est représenté par au moins une densité de mélange gaussien qui comprend plusieurs courbes gaussiennes.

7. Procédé selon la revendication 6,
dans lequel on adapte le modèle de probabilité en modifiant les variances respectives des courbes gaussiennes individuelles en fonction des grandeurs d'entrée pour la période définissable à l'avance.

8. Procédé selon l'une des revendications précédentes,
dans lequel on collecte les ensembles de données de facturation sur un intervalle de temps définissable à l'avance et la grandeur de sortie du réseau neuronal donne, pour ces ensembles de données de facturation, après écoulement de l'intervalle de temps définissable à l'avance, la probabilité qu'un appel frauduleux ait été passé dans l'intervalle de temps définissable à l'avance.

9. Procédé selon l'une des revendications précédentes,
dans lequel plusieurs abonnés présentant un comportement d'appel comparable sont réunis en un groupe et le profil d'utilisateur du groupe fait ainsi l'objet d'un apprentissage dans le réseau neuronal.

10. Procédé selon l'une des revendications précédentes,
dans lequel le réseau neuronal est adapté, après l'apprentissage, sur la base des probabilités déterminées pour un appel frauduleux.
